# EUROPEAN PATENT SPECIFICATION

(11) **EP 1 749 325 B1**
(45) Date of publication and mention of the grant of the patent: **26.10.2011**
(21) Application number: 05738685.6
(22) Date of filing: 22.04.2005
(51) Int. Cl.: H01M 8/04

(54) **FUEL CELL BASED POWER GENERATION SYSTEMS AND METHODS OF OPERATING THE SAME**
AUF BRENNSTOFFZELLEN BASIERENDE STROMERZEUGUNGSSYSTEME UND VERFAHREN ZU IHREM BETRIEB
SYSTEMES DE GENERATION D'ENERGIE BASES SUR UNE PILE A COMBUSTIBLE ET PROCEDES D'EXPLOITATION

(30) Priority: 23.04.2004 DE 102004020029; 30.11.2004 US 631705 P
(43) Date of publication of application: 07.02.2007
(73) Proprietor: NuCellSys GmbH, 73230 Kirchheim/Teck-Nabern (DE)
(72) Inventor: LIMBECK, Uwe, M., 73230 Kirchheim/Teck (DE)
(74) Representative: JENSEN & SON
(86) International application number: PCT/US2005/013773
(87) International publication number: WO 2005/107000

(56) References cited:
- EP-A1- 0 788 172
- JP-A- 2003 142 136
- US-A- 5 753 383
- US-A1- 2001 035 694
- US-A1- 2002 041 984
- US-A1- 2003 162 063
- US-B1- 6 492 044

## Description

### BACKGROUND OF THE INVENTION

The present systems and methods relate to fuel cell based power generation systems for the generation of electrical energy, and particularly, to improving the freeze-start capability of such systems.

Fuel cells are electrochemical energy converters, which directly convert chemical energy to electrical energy. For this purpose, the fuel cell is supplied with a fuel and with oxidant, such as air, as reactants. The reactants are spatially separated by an electrolyte, through which ion exchange takes place. Example fuels include hydrogen, or methane. There are several known types of fuel cells, including polymer electrolyte membrane fuel cells (PEMFC), phosphoric acid fuel cells (PAFC), and solid oxide fuel cells (SOFC). This list is not complete and the present systems and methods are not limited to a specific type of fuel cell, nor to a specific fuel, nor to a specific application. For example, the application of the present systems and methods invention in a motor vehicle is only one possible embodiment.

Water is present in fuel cells. It may be produced in the fuel cell as product of the reaction of hydrogen and oxygen, or it may be supplied to the fuel cell for cooling or humidification purposes. For example, the membrane serving as electrolyte in PEM fuel cells must be humidified to allow an efficient cation exchange. For this, humidification of the fuel stream as well as humidification of the oxidant stream are typically employed. In many cases, both reactant streams are humidified with water in a humidifier upstream of the fuel cell. Water may also be conducted through special cooling channels in the fuel cell to cool the fuel cell.

After an operational shutdown of a fuel cell, the temperature of the fluids contained therein and of the components of the power generation system gradually drop to ambient temperature. During this period, water vapor that is still present in the fluid channels of the power generation system condenses and precipitates as liquid water. If the ambient temperature drops below 0° C, any water present in the power generation system may freeze. Such water may be located in the fuel cells, but may also be present in other areas of the power generation system, such as circulation devices (e.g., pumps, compressors, fans, blowers) for the reactants, valves, or in the flow channels that conduct the reactant streams or the cooling water through the power generation system. Often, the flow channels have areas in which water can accumulate, such as in corners or at the end of dead ends where sensors are located.

Problems may occur upon resumption of power generation if condensed water drops or ice are still present in the power generation system. The presence of ice or condensed water may obstruct the flow of reactants, and the presence of ice in particular may affect the proper functioning of system components, such as valves, sensors, or circulation devices. In some situations, this may result in damage to the components.

To prevent accumulation of water drops and ice and to improve the freeze-starting capability of fuel cell systems, a conventional approach is to purge (*i.e*., blow dry gas through) the flow channels of the system immediately after operation ceases. However, this method has disadvantages. The use of purging requires considerable amounts of time and energy. Moreover, as the quantity of water present in the system is unknown, it is difficult to estimate whether the amount of purge gas and the duration of the purging will be adequate for sufficient drying. Furthermore, it is difficult for the purge gas to reach water that has been deposited at poorly accessible spots of the flow channel system, such as at the ends of flow channels and in corners. Moreover, the membranes of PEM fuel cells can normally not be dried completely. There will always be small remaining reservoirs, from which water is able to diffuse to other locations and, in particular, to critical positions in the power generation system.

JP 2003-142136 proposes the provision of a condenser for drying the internal fluid channels of a fuel cell stack, where the condenser is cooled during a power generating operation. For vehicular fuel cell stacks, JP 2003-142136 proposes disposing the condenser just behind the radiator grill, so that it is cooled by the air draft. The object of the JP 2003-142136 solution is that water vapor still present in the fluid channels of the fuel cell stack after operation ceases can travel through an open path to the condenser and precipitate there. Thus, the condenser forms a predetermined condensation point. However, after shut down the temperature gradient between the condenser and the fuel cell stack gradually decreases.

An alternate approach to minimize or avoid the problems associated with freezing water in a fuel cell stack is to house the fuel cell stack in a thermally insulated container. This approach is described in US 2003/0162063. One drawback of using the thermally insulated container housing only the fuel cell stack is that the other components of the power generation system may retain water in inaccessible locations. The system described in US 2003/0162063 keeps residual water in the fuel cell stack from freezing by maintaining the temperature in the insulating container sufficiently above freezing with a heating system arranged in the insulating container. However, water droplets may remain in the reactant channels of the power generation system after an operational shutdown.

### BRIEF SUMMARY OF THE INVENTION

The present systems and methods include a power generation system having a fuel cell stack composed of one or more fuel cells, as well as at least one predetermined condensation point, on which water that is present in the power generation system after an operational shutdown condenses. Methods and apparatus are provided, which are intended and designed to inhibit an equalization (reduction) of the temperature gradient between the predetermined condensation point and at least other parts of the power generation system after operation of the system ceases. Thus, after shutdown the temperature gradient may be maintained by force or at least its weakening may be attenuated. This is solved with a fuel cell based power generation system as disclosed is claim 1 and a method of operating it as disclosed is claim 18.

There are various measures that may be implemented to inhibit the temperature equalization. In one embodiment, the apparatus used for this purpose may comprise at least a thermally insulating jacket, for example in the form of an insulating container that houses at least the fuel cell stack, where the predetermined condensation point is located outside of this insulating container. Other components of the power generation system, such as the reactant supply circulation devices, may be located in the same or in another insulating container. Similarly, it may be advantageous to dispose some or all of the sensors and valves of the power generation system in the insulating container. In one embodiment, only the predetermined condensation point is located outside of the insulating container, together with any adjoining parts of a pipe system in which the reactants and/or the cooling water are transported.

The insulating container of the present systems and methods serves to maintain a temperature gradient between the components installed in the insulating container and a condenser arranged on the outside.

Not all of the components of the power generation system that are to be insulated with respect to the predetermined condensation point have to be housed within the same insulating container. In alternative embodiments, two (or even more) separate insulating containers may be present to house various components of the power generation system. In addition, in some embodiments, there may be a thermal bridge of a material that is a good thermal conductor (e.g., copper) provided between the different insulating containers. In still other embodiments, there may be a thermal bridge between an insulating container and one or more individual components located outside of the insulating container.

Inhibition of temperature equalization may comprise - instead of or in addition to the insulating container - a cooling fan cooling the predetermined condensation point. In alternative embodiments, a heater may be provided for the insulating container.

In other embodiments of the present systems and methods, the power generation system includes a fuel cell stack having one or more fuel cells, and a passive water collecting component, which is intended and designed to attract water that is still present in the power generation system after an operational shutdown of the system. The water-collecting component contains a water-adsorbing material.

An adsorbing material can also aid in achieving the goal of collecting any water still present (in vapor or droplet form) in the power generation system after shutdown at a predetermined location in order to prevent the water from remaining at undesired points within the power generation system. In contrast to for example a pump, adsorbing materials act passively, *i.e.,* no additional energy is required to attract the water. This has a positive effect on the overall energy balance of the power generation system. Suitable candidates for the adsorbing materials include, in principle, all materials that have water-adsorbing properties, such as ion exchange resins, silica gels, or zeolites. The quantity of adsorbing material may be determined based on - among other factors - the quantity of water employed during operation of the power generation system and the expected residual quantity of water in the system after shutdown.

In one embodiment, the water-collecting component that contains the adsorbing material is disposed between the fuel cell stack and a compressor, connected upstream of the stack, that supplies a reactant stream to the fuel cell stack. The reactant stream is heated by the compression, and as a rule moisture will be extracted from the reactant stream, *i.e.,* the reactant stream will become drier. By conducting the warm and dry reactant stream, which is available at the compressor outlet, across the adsorbing material, the latter can be desorbed (regenerated) very efficiently upon resumption of operation. Alternatively, a separate heating element may be provided to regenerate the adsorbing material.

Those of ordinary skill in the art will appreciate that the two aspects described above may be combined. For example, the predetermined condensation point and the adsorbing material may be at locations within the power generation system that are far apart, or alternatively the water-collecting component that contains the adsorbing material to be located in immediate proximity to a cold spot that forms the predetermined condensation point. In still another alternative embodiment, the water-collecting component may be located at the coldest point in the system.

The present systems and methods also include a method of improving the freeze-starting capability of a power generation system including a fuel cell stack of one or more fuel cells, whereby moisture is extracted from the power generation system after an operational shutdown by means of at least one desired condensation point. According to the present systems and methods, the equalization of a temperature gradient between the at least one desired condensation point and other (*i.e*.. to-be-dried) components of the power generation system after the operational shutdown of the power generation system is inhibited. The temperature equalization may be inhibited by means of a thermally insulating container, in which at least the fuel cell stack is disposed, with at least one desired condensation point arranged outside of the insulating container.

In an alternative embodiment of the present methods, the freeze-starting capability of a power generation system may be improved by extracting moisture from the power generation system after shutdown by means of a passive water-collecting component, wherein a water-adsorbing material is employed for moisture removal.

These and other aspects will be evident upon reference to the attached Figures and following detailed description.

### BRIEF DESCRIPTION OF THE DRAWINGS

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn are not intended to convey any information regarding the actual shape of the particular elements, and have been solely selected for ease of recognition in the drawings.
Figure 1 is a schematic view of a power generation system housed in an insulating container according to one illustrated embodiment.
Figure 2 is a schematic view of a power generation system with only a fuel cell stack housed in an insulating container according to one illustrated embodiment.
Figure 3 is a schematic view of a power generation system with a fuel cell stack housed in a first insulating container and a fan, sensor, and valve housed in a second insulating container according to one illustrated embodiment.
Figure 4 is a schematic view of the power generation system of Figure 3 with a thermal bridge connected between the first insulating container and the second insulating container according to one illustrated embodiment.
Figure 5 is a schematic view of the power generation system of Figure 2 with a thermal bridge connecting the insulating container to a recirculation fan according to one illustrated embodiment.

### DETAILED DESCRIPTION OF THE INVENTION

In the following description, certain specific details are set forth in order to provide a thorough understanding of various embodiments of the invention. However, one skilled in the art will understand that the invention may be practiced without these details. In other instances, well known structures associated with fuel cells and power generation systems have not been shown or described in detail to avoid unnecessarily obscuring descriptions of the embodiments of the invention.

Unless the context requires otherwise, throughout the specification and claims which follow, the word "comprise" and variations thereof, such as, "comprises" and "comprising", are to be construed in an open, inclusive sense, that is as "including, but not limited to."

The headings provided herein are for convenience only and do not interpret the scope or meaning of the claimed invention.

It has been observed that adequate drying of the fuel cell stack and other components of the power generation system, such as circulation devices, valves, and sensors, may be insufficient if the drying relies solely on the temperature gradient established during operation between the condensation point and the other components in the system. Uncontrolled temperature equalization often takes place so rapidly after shutdown that insufficient quantities of the residual water are captured in various regions of the system.

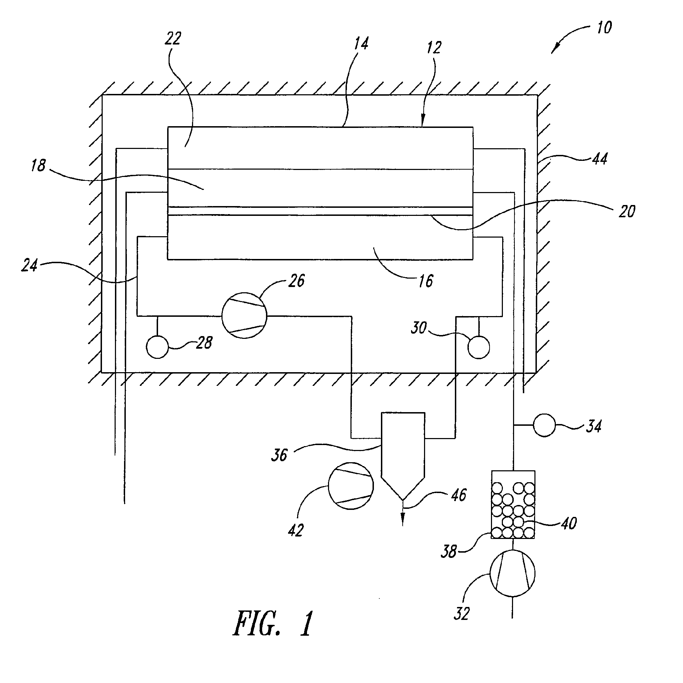

Figure 1 shows a power generation system 10 having a fuel cell stack 12. The fuel cell stack 12 generally comprises a multitude of individual fuel cells combined into the stack 12, however for the purpose of clarity, only a single fuel cell 14 is illustrated in Figure 1. The fuel cell 14 has an anode 16 and a cathode 18, separated by an electrolyte 20. Although not shown in detail in Figure 1, a fuel stream is supplied to anode 16, while an oxidant stream, such as air, is supplied to cathode 18. In one embodiment, the fuel cell 14 is a polymer electrolyte membrance fuel cell, for use in a motor vehicle. In addition, the fuel cell 14 includes a cooling area 22, through which a coolant, such as water, flows for cooling purposes.

During operation of the power generation system 10, an amount of residual fuel (*i.e.*, not consumed in fuel cell 14) is recirculated in an anode recirculation loop 24 and an amount of fresh fuel is mixed with the residual fuel on an anode-inlet side, which is not described in any detail but known in the art. The anode recirculation loop 24 includes a recirculation device, such as a recirculation fan 26, that conducts the residual fuel to the inlet of anode 16. The power generation system 10 may include sensors 28, 30, which can serve to measure various characteristics of the residual fuel, such as pressure, temperature, concentration, and/or relative humidity.

A compressor 32 delivers an air stream to an inlet side of the cathode 18. One or more sensors 34 may measure various characteristics of the air stream, such as pressure, temperature, concentration, and/or relative humidity.

Reactant gases supplied to the anode 16 and the cathode 18 are humidified with water with humidifiers to maintain the moisture of the electrolyte 20 during operation of the power generation system 10. The humidified water added to the reactant gases is used for cooling the recirculation fan 26 and/or compressor 32.

After an operational shutdown of the power generation system 10, water in either vapor or droplet form generally remains in the reaction stream flow channels and the cooling water channels. The water vapor may condense when the temperature of the various components of power generation system 10 decreases over time. It is even possible for ice to form in power generation system 10 if the temperature falls below the freezing point of water. When resuming operation of the power generation system 10, any ice crystals that may have formed or water droplets that may remain within the fuel cell 14, or in other components of the power generation system 10, such as the recirculation fan 26 or the compressor 32, may lead to problems. Ice and/or water droplets can hinder the flow of the reactants and the coolant, and in particular, ice may adversely affect some system components with moving parts, such as the recirculation fan 26, the compressor 32 and/or the valves within the power generation system 10. (Although no valves are shown in Figure 1, it is understood that power generation systems of the type described herein is generally equipped with a number of valves to control the fluid flows.)

After operation of power generation system 10 ceases, for example when a vehicle equipped with power generation system 10 is parked, the various system components are dried as completely as possible by collecting residual water at one or more desired collecting points. The collecting points include a condenser 36 and an adsorption unit 38, which contains a water adsorbing material 40 according to the illustrated embodiment. The condenser 36 is integrated into anode recirculation loop 24 where it is connected downstream of the recirculation fan 26. The adsorption unit 38 is integrated into the air supply/conducting system. Specifically, the adsorption unit 38 is disposed between the compressor 32 and the inlet of the cathode 18 so that warm compressed air from the outlet of the compressor 32 passes over the adsorbing material 40.

The condenser 36 acts as a condensation point because the condenser 36 is the coldest point in anode recirculation loop 24. Because of the temperature gradient, any residual water that is still present in the anode recirculation loop 24 after shutdown of the power generation system 10 is attracted to the condenser 36 where the water condenses. The temperature gradient between the condenser 36 and the fuel cell stack 12, as well as the other components of the anode recirculation loop 24, such as the recirculation fan 26, may be established during operation of the power generation system 10. For example, if the power generation system 10 is installed in a vehicle, the air draft may be used to cool the condenser 36. In other embodiments, it is possible to link the condenser 36 with a cooling fan 42, which selectively cools the condenser 36.

In order to maintain the temperature gradient between the condenser 36 and the other components of the anode recirculation loop 24, which includes the fuel cell stack 12, for a sufficiently long time after the operational shutdown of the power generation system 10, an insulating container 44 may be provided. In one embodiment, the insulating container 44 houses at least the fuel cell stack 12, the recirculation fan 26, and sensors 28, 30. The insulating container 44 has a thermally insulating effect and inhibits an equalization of the temperature of the components housed therein with respect to an ambient temperature external to the container 44. The condenser 36, on the other hand, is arranged outside of insulating container 44, and accordingly cools toward ambient temperature at a faster rate than components located within the container 44.

The configuration of condenser 36 may take various forms. In one embodiment, the condenser 36 is a pot-shaped container, in which the attracted water is collected. In another embodiment, the condenser 36 is formed from a curved piece of pipe. In yet another embodiment, the condenser 36 is a drain valve (not shown), which - when opened - discharges the collected water, as schematically indicated in Figure 1 by arrow 46. The specific configuration of condenser 36 will depend on an expected quantity of residual water in the power generation system 10, especially in the anode recirculation loop 24, and also depend on the energy generated during condensation. For this reason, the condenser 36 is generally configured with a sufficiently large surface area to quickly radiate away the heat generated during condensation.

In order to further maintain the temperature gradient between the components inside the insulating container 44 and the condenser 36, the cooling fan 42 may continue to run after operation of the power generation system 10 has ceased according to at least one embodiment. In particular, it may be possible to cool the condenser 36 to a temperature below the ambient temperature by means of the cooling fan 42.

Additionally or alternatively, the adsorption unit 38 provides another option to extract residual water from the power generation system 10 and to selectively collect the water at a predetermined point. While the embodiments described herein are not limited to a specific type of adsorbing material, when choosing the type and quantity of adsorbing material 40, the overall expected quantity of residual water in power generation system 10 should be considered.

After residual water has been adsorbed in the cooling phase of the power generation system 10, regeneration of the adsorbing material 40 may be necessary during normal operation. In one embodiment, the heated and compressed air available at the outlet of the compressor 32 allows a highly effective desorption of the adsorbed water. In this embodiment, the adsorption unit 38 is arranged in spatial proximity to the compressor 32 to more effectively utilize the higher temperature compressed air.

It should be noted that in an alternative embodiment, the anode recirculation loop 24 contains a predetermined condensation point. In addition, other areas of the power generation system 10 may be similarly equipped. For example, alternatively or additionally, the oxidant supply system of the power generation system 10 may contain a condenser. Likewise, the coolant loop may contain a condenser. Similarly, the power generation system 10 may include more than one adsorption point. In the embodiment shown in Figure 1, the adsorption point is located in the air supply system, however the adsorption point can alternatively or additionally be located in the anode recirculation loop 24 and/or the coolant loop.

In still other embodiments, the adsorption unit may be disposed in the anode recirculation loop 24 near the condenser 36. For example, the adsorption unit may be disposed in the immediate proximity of the condenser 36. Likewise, the oxidant system of the power generation system 10 may contain a condenser in addition to the adsorption unit 38.

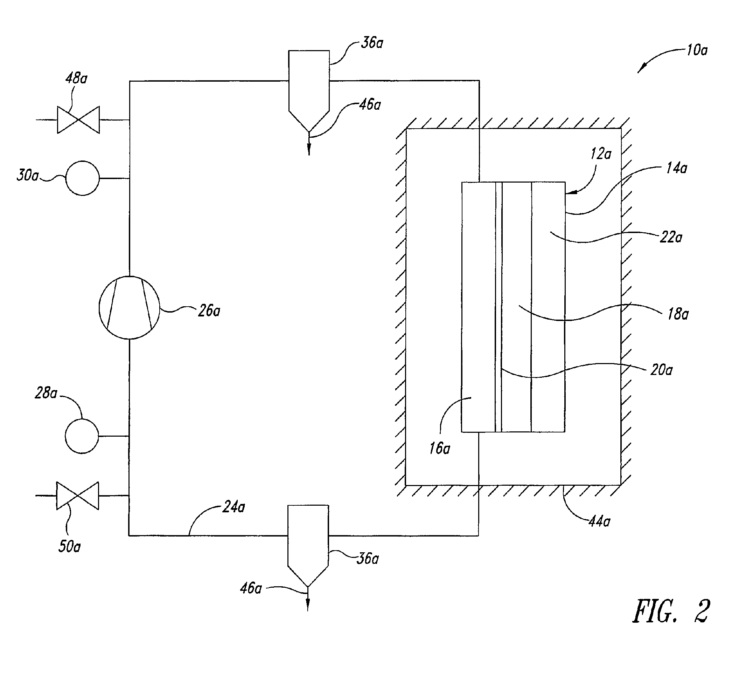

In Figures 2 through 5, similar components or components with similar functions are identified by the same reference labels as in Figure 1, with a lower-case letter appended. Unless specified differently in the following discussion, the functionality/composition of the components is generally as described above.

In the embodiment shown in Figure 2, only the fuel cell stack 12a is housed within the insulating container 44a, while the recirculation fan 26a of the anode recirculation loop 24a is arranged outside of the insulating container 44a. Two condensers 36a are disposed in the anode recirculation loop 24a, with one of the condensers positioned upstream of the recirculation fan 26a and the other condenser positioned downstream of the recirculation fan 26a.

A valve 48a serves to control the quantity of humidifying water being supplied to the power generation system 10a, while a valve 50a allows an amount of fuel to be discharged, or purged, from the power generation system 10a. In the embodiment shown in Figure 2, the valves 48a, 50a and the sensors 28a, 30a are disposed outside of the insulating container 44a.

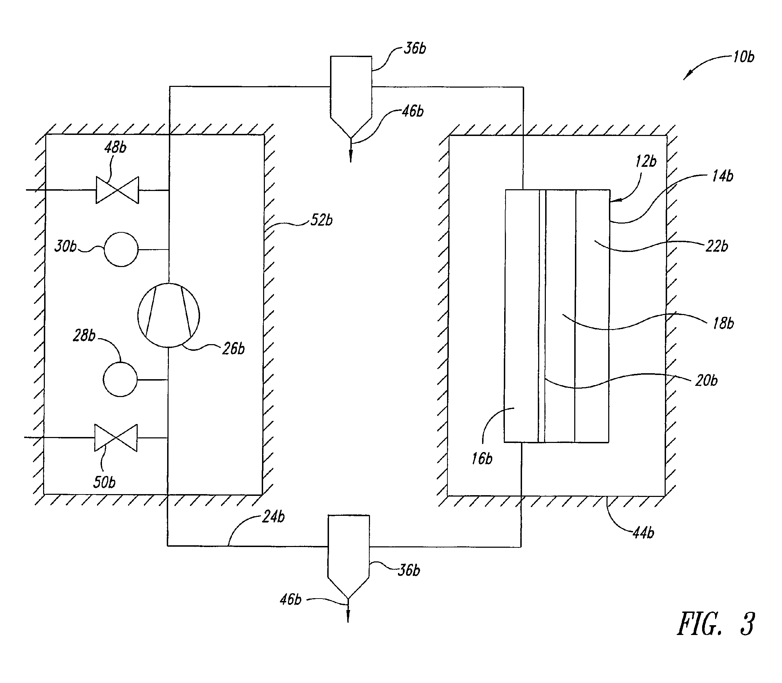

In the embodiment shown in Figure 3, a second insulating container 52b is provided, which houses the recirculation fan 26b, the sensors 28b, 30b and the valves 48b, 50b. Only the two condensers 36b are located outside of the insulating containers 44b, 52b. It is understood other components of the power generation system 10b, which are not shown in Figure 3, such as components related to the air supply system or the cooling loop of fuel cell stack 12b, may also be housed in one of the two insulating containers 44b, 52b.

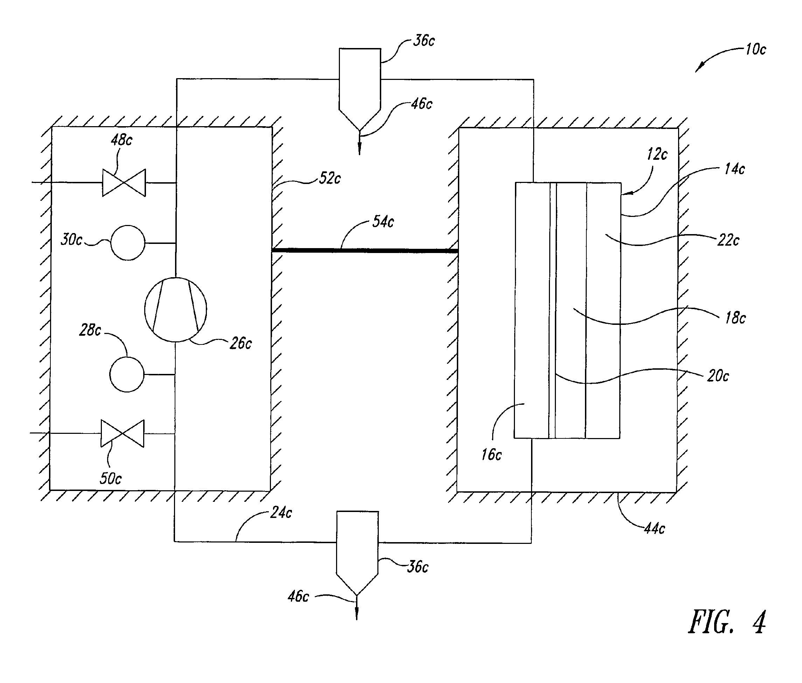

The embodiment depicted in Figure 4 includes a thermal bridge 54c, which extends between the two insulating containers 44c, 52c. The thermal bridge is formed of a material that is a good thermal conductor (e.g., copper) and provides for temperature equalization between the two insulating containers 44c, 52c; specifically for temperature equalization between the interiors of the containers 44c, 52c. The thermal bridge 54c allows the heat generated during operation of fuel cell stack 12c to be used to heat the components in insulating container 52c. This may be advantageous if the components housed in insulating container 52c generate no heat or only a small amount of heat during operation of the power generation system 10c.

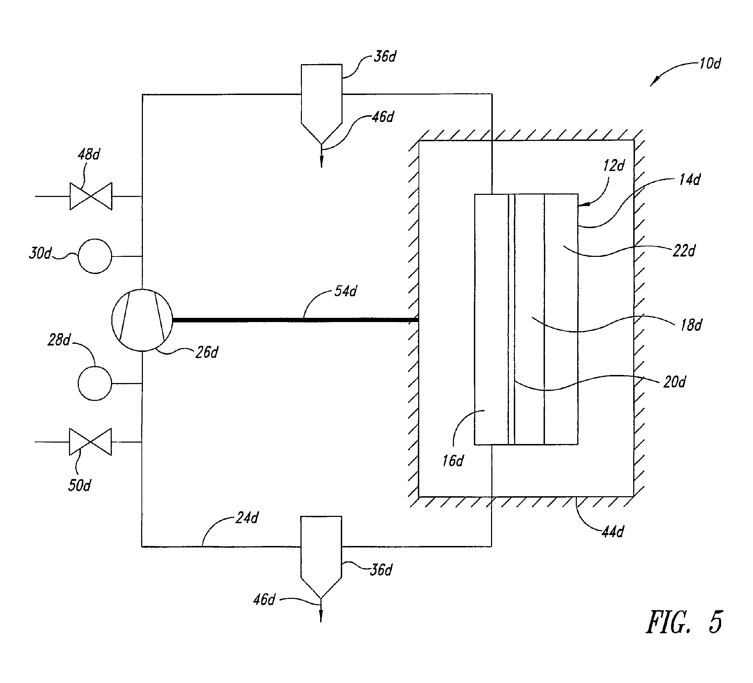

Figure 5 shows one insulating container 44d that houses the fuel cell stack 12d. The recirculation fan 26d is connected to the insulating container 44d with a thermal bridge 54d. The thermal bridge 54d allows selective heat transfer to individual components located outside of the insulating container 44d, for example the heat transfer from the insulating container 44d to the recirculation fan 26 as illustrated in the present embodiment. The thermal bridge 54d can also be connected to other "critical" components to transfer heat and thus remove residual water when operation of the power generation system 10d ceases. As those of ordinary skill in the art will appreciate, in other embodiments additional thermal bridges may connect insulating container 44d to other components, such as other circulation devices (fans, pumps, compressors, blowers, etc.) of power generation system 10d, or to valves.

From the foregoing it will be appreciated that, although specific embodiments of the invention have been described herein for purposes of illustration, various modifications may be made without deviating from the spirit and scope of the invention. Accordingly, the invention is not limited except as by the appended claims.

## Claims

1. A fuel cell based power generation system (10) comprising:
a first component (36) operable to condense water present in the fuel cell of the power generation system (10) after an operational shutdown of the power generation system (10),
the first component (36) having a first temperature after an operational shutdown of the power generation system,
a fuel cell stack comprising at least the one fuel cell (14), and
having a second temperature that is higher than the first temperature of the first component after the operational shutdown of the power generation system,
a subsystem to maintain a temperature gradient between the first component (36) and the fuel cell stack (12) for a substantial amount of time after the operational shutdown of the power generation system (10)
**characterized in that** the subsystem comprises
a first thermal insulator (44) to house the fuel cell stack (12), the first component located outside of the first thermal insulator (44) in order to attenuate the weakening of the temperature gradient.

2. The power generation system (10) of claim 1 wherein the first component is a condenser (36).

3. The power generation system (10) according to claim 1, **characterized by** further comprising, a cooling fan (42) being designed to cool the first component (36) for the substantial amount of time, thereby maintaining the temperature gradient by force.

4. The power generation system (10) of claim 1, further comprising: a thermal bridge (54) coupling the first thermal insulator (44) to a second component of the power generation system, the second component located outside of the first thermal insulator (44).

5. The power generation system (10) of claim 4 wherein the thermal bridge (54) is operable to selectively transfer heat from the first thermal insulator (44) to the second component.

6. The power generation system (10) of claim 4 wherein the thermal bridge (54) is made from a thermally conductive material.

7. The power generation system (10) of claim 6 wherein the thermally conductive material is copper.

8. The power generation system (10) of claim 1 wherein the subsystem comprises the first thermal insulator (44) to house the fuel cell stack (12) and a second thermal insulator to house a second component.

9. The power generation system (10) of claim 8 wherein
the second component is selected from the group of power generation components consisting of a sensor, a valve, and a fan (54).

10. The power generation system (10) of claim 8, further comprising: a thermal bridge (54) coupling the first thermal insulator (44) to the second thermal insulator to allow an amount of heat transfer therebetween.

11. The power generation system (10) of claim 1, further comprising: a water adsorbing material (40) located within the power generation system (10) to attract at least some water present within the system after the operational shutdown of the system (10).

12. The fuel cell based power generation system (10) according to one of the preceding claims further comprising a water-collecting device; and a water adsorbing material coupled to the water-collecting device, the water adsorbing material (40) located within the power generation system (10) to attract at least some water present within the system after an operational shutdown of the system.

13. The power generation system (10) of claim 12, further comprising a compressor (32) to supply an oxidant stream to the fuel cell stack, wherein the water-collecting device is disposed between the fuel cell stack (14) and the compressor (32).

14. The power generation system (10) of claim 12 wherein the water adsorbing material (40) is a silica gel.

15. The power generation system (10) of claim 12 wherein the water adsorbing material (40) is a zeolite

16. The power generation system (10) of claim 13 wherein the water adsorbing material (40) is an ion exchange resin.

17. The power generation system (10) of claim 12, further comprising: a heating element operable to regenerate the adsorbing material.

18. A method of operating a fuel cell based power generation system (10) the method comprising: establishing a temperature gradient between a first component and a fuel cell stack (12) comprising at least the one fuel cell (14) within the power generation system during operation of the power generation system, the first component operable to condense water present in the power generation system; ceasing operation of the power generation system, the first component having a first temperature and the fuel cell stack (12) having a second temperature after the operation of the system ceases, the first temperature being lower than the second temperature resulting in a temperature gradient between the first component and the fuel cell stack (12) ; and maintaining the temperature gradient for at least a substantial amount of time after the operation of the system ceases to draw at least some moisture present in the power generation system from the fuel cell stack (12) to the first component, the temperature gradient being maintained with a subsystem that comprises a first thermal insulator (44) to house the fuel cell stack (12), the first component being located outside of the first thermal insulator (44).

19. The method of claim 18 wherein establishing a temperature gradient between the first component and the fuel cell stack (12) within the power generation system includes operating the first component as a condenser.

20. The method of claim 18 wherein maintaining the temperature gradient for at least a substantial amount of time after the operation of the system ceases includes cooling the first component with a cooling fan for the substantial amount of time.

21. The method of claim 18 wherein thermally insulating the fuel cell stack (12) includes supplying an amount of energy to continually thermally insulate the fuel cell stack (12) for the substantial amount of time.

22. The method of claim 18, further comprising: extracting additional moisture from a desired location within the power generation system with an adsorbing material.

23. The method of claim 22 wherein extracting additional moisture from the desired location within the power generation system includes directing an oxidant stream of the power generation system across the adsorbing material.

24. The method of claim 22, further comprising: desorbing at least some of the moisture adsorbed by the adsorbing material.

25. The method of claim 22, further comprising: regenerating the adsorbing material by heating the adsorbing material.

26. The method of claim 18, further comprising: transferring an amount of heat between the fuel cell stack (12) and a second component through a thermal bridge.

27. The method of claim 22, further comprising: desorbing at least some of the moisture adsorbed by the adsorbing material.

## Patentansprüche

1. Auf Brennstoffzellen basierendes Stromerzeugungssystem (10), umfassend:
eine erste Komponente (36), die in der Brennstoffzelle des Stromerzeugungssystems (10) vorhandenes Wasser nach einer betrieblichen Abschaltung des Stromerzeugungssystems (10) kondensieren kann, wobei die erste Komponente (36) nach einer betrieblichen Abschaltung des Stromerzeugungssystems eine erste Temperatur aufweist,
einen Brennstoffzellenstapel, der mindestens die eine Brennstoffzelle (14) umfasst und eine zweite Temperatur aufweist, die höher ist als die erste Temperatur der ersten Komponente nach der betrieblichen Abschaltung des Stromerzeugungssystems,
ein Teilsystem zur Erhaltung eines Temperaturgefälles zwischen der ersten Komponente (36) und dem Brennstoffzellenstapel (12) für eine erhebliche Zeitspanne nach der betrieblichen Abschaltung des Stromerzeugungssystems (10),
**dadurch gekennzeichnet, dass** das Teilsystem umfasst:
einen ersten Wärmedämmer (44) zur Aufnahme des Brennstoffzellenstapels (12), wobei die erste Komponente außerhalb des ersten Wärmedämmers (44) angeordnet ist, um die Schwächung des Temperaturgefälles zu dämpfen.

2. Stromerzeugungssystem (10) nach Anspruch 1, wobei die erste Komponente ein Kondensator (36) ist.

3. Stromerzeugungssystem (10) nach Anspruch 1, **dadurch gekennzeichnet, dass** es weiter umfasst: ein Kühlgebläse (42), das zum Kühlen der ersten Komponente (36) für die erhebliche Zeitspanne und dadurch zur zwangsläufigen Erhaltung des Temperaturgefälles ausgelegt ist.

4. Stromerzeugungssystem (10) nach Anspruch 1, weiter umfassend:
eine Wärmebrücke (54), die den ersten Wärmedämmer (44) mit einer zweiten Komponente des Stromerzeugungssystems verbindet, wobei die zweite Komponente außerhalb des ersten Wärmedämmers (44) angeordnet ist.

5. Stromerzeugungssystem (10) nach Anspruch 4, wobei die Wärmebrücke (54) zur selektiven Übertragung von Wärme vom ersten Wärmedämmer (44) zur zweiten Komponente betätigbar ist.

6. Stromerzeugungssystem (10) nach Anspruch 4, wobei die Wärmebrücke (54) aus einem wärmeleitenden Material besteht.

7. Stromerzeugungssystem (10) nach Anspruch 6, wobei das wärmeleitende Material Kupfer ist.

8. Stromerzeugungssystem (10) nach Anspruch 1, wobei das Teilsystem den ersten Wärmedämmer (44) zur Aufnahme des Brennstoffzellenstapels (12) und einen zweiten Wärmedämmer zur Aufnahme einer zweiten Komponente umfasst.

9. Stromerzeugungssystem (10) nach Anspruch 8, wobei die zweite Komponente aus der Gruppe von Stromerzeugungskomponenten ausgewählt ist, die aus einem Sensor, einem Ventil und einem Gebläse (54) besteht.

10. Stromerzeugungssystem (10) nach Anspruch 8, weiter umfassend:
eine Wärmebrücke (54), die den ersten Wärmedämmer (44) mit dem zweiten Wärmedämmer verbindet, um ein gewisses Maß an Wärmeübertragung zwischen ihnen zu ermöglichen.

11. Stromerzeugungssystem (10) nach Anspruch 1, weiter umfassend: ein Wasser adsorbierendes Material (40), das im Stromerzeugungssystem (10) angeordnet ist, um nach der betrieblichen Abschaltung des Stromerzeugungssystems (10) mindestens etwas Wasser im System anzuziehen.

12. Auf Brennstoffzellen basierendes Stromerzeugungssystem (10) nach einem der vorhergehenden Ansprüche, weiter umfassend: eine Wassersammeleinrichtung; und ein mit der Wassersammeleinrichtung verbundenes Wasser adsorbierendes Material, wobei das Wasser adsorbierende Material (40) innerhalb des Stromerzeugungssystems (10) angeordnet ist, um nach einer betrieblichen Abschaltung des Systems mindestens etwas Wasser im System anzuziehen.

13. Stromerzeugungssystem (10) nach Anspruch 12, weiter umfassend:
einen Kompressor (32) zur Versorgung des Brennstoffzellenstapels mit einem Oxidationsmittelstrom, wobei die Wassersammeleinrichtung zwischen dem Brennstoffzellenstapel (14) und dem Kompressor (32) angeordnet ist.

14. Stromerzeugungssystem (10) nach Anspruch 12, wobei das Wasser adsorbierende Material (40) ein Silikagel ist.

15. Stromerzeugungssystem (10) nach Anspruch 12, wobei das Wasser adsorbierende Material (40) Zeolith ist.

16. Stromerzeugungssystem (10) nach Anspruch 12, wobei das Wasser adsorbierende Material (40) ein lonenaustauschharz ist.

17. Stromerzeugungssystem (10) nach Anspruch 12, weiter umfassend:
ein zur Regeneration des adsorbierenden Materials betätigbares Heizelement.

18. Verfahren zum Betrieb eines auf Brennstoffzellen basierenden Stromerzeugungssystems (10), umfassend: die Bestimmung eines Temperaturgefälles zwischen einer ersten Komponente und einem mindestens die eine Brennstoffzelle (14) aufweisenden Brennstoffzellenstapel (12) innerhalb des Stromerzeugungssystems während des Betriebs des Stromerzeugungssystems, wobei die erste Komponente im Stromerzeugungssystem vorhandenes Wasser kondensieren kann; die Unterbrechung des Betriebs des Stromerzeugungssystems, wobei nach der Unterbrechung des Betriebs des Stromerzeugungssystems die erste Komponente eine erste Temperatur und der Brennstoffzellenstapel (12) eine zweite Temperatur hat, wobei die erste Temperatur niedriger ist als die zweite Temperatur, woraus sich ein Temperaturgefälle zwischen der ersten Komponenten und dem Brennstoffzellenstapel (12) ergibt; und die Erhaltung des Temperaturgefälles für mindestens eine erhebliche Zeitspanne nach der Unterbrechung des Betriebs des Systems, um mindestens ein gewisses Maß der im Stromerzeugungssystem vorhandenen Feuchtigkeit aus dem Brennstoffzellenstapel (12) in die erste Komponente zu ziehen, wobei das Temperaturgefälle mit einem Teilsystem erhalten wird, das einen ersten Wärmedämmer (44) zur Aufnahme des Brennstoffzellenstapels (12) umfasst, wobei die erste Komponente außerhalb des ersten Wärmedämmers (44) angeordnet ist.

19. Verfahren nach Anspruch 18, wobei die Bestimmung eines Temperaturgefälles zwischen der ersten Komponente und dem Brennstoffzellenstapel (12) innerhalb des Stromerzeugungssystems den Betrieb der ersten Komponente als Kondensator umfasst.

20. Verfahren nach Anspruch 18, wobei die Erhaltung des Temperaturgefälles für mindestens eine erhebliche Zeitspanne nach der Unterbrechung des Betriebs des Systems das Kühlen der ersten Komponente mit einem Kühlgebläse für die erhebliche Zeitspanne umfasst.

21. Verfahren nach Anspruch 18, wobei die Wärmedämmung des Brennstoffzellenstapels (12) die Bereitstellung einer Energiemenge zur ständigen Wärmedämmung des Brennstoffzellenstapels (12) für die erhebliche Zeitspanne umfasst.

22. Verfahren nach Anspruch 18, weiter umfassend: das Entziehen von zusätzlicher Feuchtigkeit aus einer gewünschten Stelle innerhalb des Stromerzeugungssystems mit einem adsorbierenden Material.

23. Verfahren nach Anspruch 22, wobei das Entziehen von zusätzlicher Feuchtigkeit aus der gewünschten Stelle innerhalb des Stromerzeugungssystems das Leiten eines Oxidationsmittelstroms des Stromerzeugungssystems über das adsorbierende Material umfasst.

24. Verfahren nach Anspruch 22, weiter umfassend: das Desorbieren von wenigstens einem Teil der vom adsorbierenden Material adsorbierten Feuchtigkeit.

25. Verfahren nach Anspruch 22, weiter umfassend: das Regenerieren des adsorbierenden Materials durch Erwärmen des adsorbierenden Materials.

26. Verfahren nach Anspruch 18, weiter umfassend: das Übertragen einer Wärmemenge zwischen dem Brennstoffzellenstapel (12) und einer zweiten Komponente über eine Wärmebrücke.

27. Verfahren nach Anspruch 22, weiter umfassend: das Desorbieren von wenigstens einem Teil der vom adsorbierenden Material adsorbierten Feuchtigkeit.

## Revendications

1. Système (10) de génération d'énergie basé sur une pile à combustible comprenant :
un premier composant (36) apte à condenser l'eau présente dans la pile à combustible du système (10) de génération d'énergie après l'arrêt opérationnel du système (10) de génération d'énergie, le premier composant (36) présentant une première température après un arrêt opérationnel du système (10) de génération d'énergie, un ensemble de piles à combustible comprenant au moins une pile à combustible (14) et présentant une seconde température qui est supérieure à la première température du premier composant après l'arrêt opérationnel du système de génération d'énergie, un sous-système servant à maintenir un gradient de température entre le premier composant (36) et l'ensemble (12) de pile à combustible pendant une quantité de temps importante après l'arrêt opérationnel du système (10) de génération d'énergie, **caractérisé en ce que** le sous-système comprend :
un premier isolant (44) thermique pour contenir l'ensemble de pile à combustible (12), le premier composant étant placé à l'extérieur du premier isolant (44) thermique afin d'atténuer l'affaiblissement du gradient de température.

2. Système (10) de génération d'énergie selon la revendication 1, dans lequel le premier composant est un condenseur (36).

3. Système (10) de génération d'énergie selon la revendication 1, **caractérisé en ce qu'**il comprend en outre un ventilateur de refroidissement (42) conçu pour refroidir le premier composant (36) pendant une quantité de temps importante, maintenant ainsi le gradient de température de force.

4. Système (10) de génération d'énergie selon la revendication 1, comprenant en outre un pont thermique (54) qui couple le premier isolant (44) thermique au second composant du système de génération d'énergie, le second composant étant placé à l'extérieur du premier isolant (44) thermique.

5. Système (10) de génération d'énergie selon la revendication 4 dans lequel le pont thermique (54) est apte à transférer de manière sélective la chaleur du premier isolant (44) thermique au second composant.

6. Système (10) de génération d'énergie selon la revendication 4 dans lequel le pont thermique (54) est fabriqué dans un matériau thermoconducteur.

7. Système (10) de génération d'énergie selon la revendication 6 dans lequel le matériau thermoconducteur est du cuivre.

8. Système (10) de génération d'énergie selon la revendication 1, dans lequel le sous-système comprend le premier isolant (44) thermique pour contenir l'ensemble (12) de piles à combustible et un second isolant thermique pour contenir un second composant.

9. Système (10) de génération d'énergie selon la revendication 8 dans lequel le second composant est sélectionné dans le groupe de composants de génération d'énergie constitué d'un capteur, d'un clapet et d'un ventilateur (54).

10. Système (10) de génération d'énergie selon la revendication 8, comprenant en outre un pont thermique (54) couplant le premier isolant (44) thermique au second isolant thermique pour permettre le transfert d'une quantité de chaleur entre les deux.

11. Système (10) de génération d'énergie selon la revendication, comprenant en outre un matériau (40) absorbant l'eau placé à l'intérieur du système (10) de génération d'énergie pour attirer au moins une certaine quantité d'eau présente à l'intérieur du système après l'arrêt opérationnel du système (10).

12. Système (10) de génération d'énergie basé sur une pile à combustible selon l'une quelconque des revendications précédentes comprenant en outre un dispositif de récupération d'eau ; et un matériau absorbant l'eau couplé au dispositif de récupération d'eau, le matériau absorbant l'eau (40) étant placé à l'intérieur du système (10) de génération d'énergie pour attirer au moins une certaine quantité d'eau présente à l'intérieur du système après un arrêt opérationnel du système.

13. Système (10) de génération d'énergie selon la revendication 12 comprenant en outre un compresseur (32) pour fournir un flux d'oxydants à l'ensemble de piles à combustible, dans lequel le dispositif de récupération d'eau est placé entre l'ensemble (14) de piles à combustible et le compresseur (32).

14. Système (10) de génération d'énergie selon la revendication 12 dans lequel le matériau (40) absorbant l'eau est un gel de silice.

15. Système (10) de génération d'énergie selon la revendication 12 dans lequel le matériau (40) absorbant l'eau est de la zéolite.

16. Système (10) de génération d'énergie selon la revendication 12 dans lequel le matériau (40) absorbant l'eau est une résine échangeuse d'ions.

17. Système (10) de génération d'énergie selon la revendication 12 comprenant en outre :
un élément de chauffage apte à régénérer le matériau absorbant.

18. Procédé de fonctionnement d'un système (10) de génération d'énergie basé sur une pile à combustible, ledit procédé comprenant les étapes suivantes : établir un gradient de température entre un premier composant et un ensemble (12) de piles à combustible comprenant au moins une pile à combustible (14) à l'intérieur du système de génération d'énergie pendant le fonctionnement du système de génération d'énergie, le premier composant étant apte à condenser l'eau présente dans le système de génération d'énergie ; arrêter le fonctionnement du système de génération d'énergie, le premier composant présentant une première température et l'ensemble (12) de piles à combustible présentant une seconde température après l'arrêt du système, la première température étant inférieure à la seconde température afin d'obtenir un gradient de température pendant au moins une quantité de temps importante après l'arrêt du système pour attirer au moins une certaine quantité d'humidité présente dans le système de génération d'énergie depuis l'ensemble (12) de piles à combustible vers le premier composant, le gradient de température étant maintenu par un sous-système qui comprend un premier isolant (44) thermique pour contenir l'ensemble (12) de piles à combustible, le premier composant étant placé à l'extérieur du premier isolant (44) thermique.

19. Procédé selon la revendication 18 selon lequel l'établissement d'un gradient de température entre le premier composant et l'ensemble (12) de piles à combustible dans le système de génération d'énergie consiste à faire fonctionner le premier composant comme un condenseur.

20. Procédé selon la revendication 18 selon lequel le maintien du gradient de température pendant au moins une quantité de temps importante après l'arrêt du système comprend le refroidissement du premier composant par un ventilateur de refroidissement pendant une quantité de temps importante.

21. Procédé selon la revendication 18 selon lequel l'isolation thermique de l'ensemble (12) de piles à combustible consiste à introduire une quantité d'énergie pour isoler thermiquement en continu l'ensemble (12) de piles à combustible pendant une quantité de temps importante.

22. Procédé selon la revendication 18 consistant en outre à extraire l'humidité supplémentaire d'un emplacement souhaité dans le système de génération d'énergie au moyen d'un matériau absorbant.

23. Procédé selon la revendication 22 selon lequel l'extraction d'humidité supplémentaire d'un emplacement souhaité dans le système de génération d'énergie consister à diriger un flux d'oxydants du système de génération d'énergie à travers le matériau absorbant.

24. Procédé selon la revendication 22 consistant en outre en une désorption d'au moins une certaine quantité d'humidité absorbée par le matériau absorbant.

25. Procédé selon la revendication 22 consistant en outre à régénérer le matériau absorbant en chauffant le matériau absorbant.

26. Procédé selon la revendication 18 consistant en outre à transférer une quantité de chaleur entre l'ensemble (12) de piles à combustible et un second composant au moyen d'un pont thermique.

27. Procédé selon la revendication 22 consistant en outre en une désorption d'au moins une certaine quantité d'humidité absorbée par le matériau absorbant.
